# FASCICULE DE BREVET EUROPEEN

(11) **EP 2 148 345 B1**
(45) Date de publication et mention de la délivrance du brevet: **06.05.2015**
(21) Numéro de dépôt: 09164416.1
(22) Date de dépôt: 02.07.2009
(51) Int. Cl.: H01H 9/04, H02G 3/14, H01H 23/06, H02G 3/08

(54) **Equipement comprenant au moins un appareillage électrique étanche et résistant aux chocs**
Ausrüstung, die mindestens ein wasserdichtes und stoßfestes Elektrogerät umfasst
Equipment comprising at least one sealed and impact resistant electrical switchgear element

(30) Priorité: 24.07.2008 FR 0855052
(43) Date de publication de la demande: 27.01.2010
(73) Titulaire: Legrand France, 87000 Limoges (FR); Legrand SNC, 87000 Limoges (FR)
(72) Inventeur: Desissard, Olivier, 87280, LIMOGES (FR); Longeville, Jérôme, 87410, LE PALAIS SUR VIENNE (FR); Dupuy, Sébastien, 87800, SAINT PRIEST LIGOURE (FR)
(74) Mandataire: Novagraaf Technologies

(56) Documents cités:
- EP-A- 0 905 729
- DE-C1- 10 116 587
- FR-A- 2 583 567
- FR-A- 2 908 562

## Description

L'invention concerne, de façon générale, le domaine des appareillages électriques.

Plus précisément, l'invention concerne un équipement comprenant au moins un appareillage électrique à usage intensif, chaque appareillage comprenant : un support plat conçu pour être fixé, en configuration opérationnelle de cet appareillage, à une cloison telle qu'un mur ou un plafond ; un sous-ensemble fonctionnel fixé au support et partiellement encastré dans la cloison en configuration opérationnelle ; et une plaque métallique fixée, en configuration opérationnelle, à la cloison par des moyens de fixation conçus pour résister à des tentatives d'effraction, la plaque comprenant essentiellement une paroi dotée d'un rebord périphérique tombant en direction du sous-ensemble, de première et deuxième faces opposées dont la deuxième est tournée vers le sous-ensemble et délimite une cavité, et d'une fenêtre donnant au moins fonctionnellement accès au sous-ensemble fonctionnel.

Des équipements de ce type sont commercialement disponibles aujourd'hui, et des équipements voisins sont par exemple décrits dans les documents de brevets FR 2 855 296 et FR 2 908 562.

En fait, les équipements concernés sont constitués d'appareillages notamment destinés à être installés dans des lieux publics, et doivent de ce fait résister à des conditions d'utilisation sévères, y compris à des tentatives de dégradation volontaire.

L'une des principales difficultés à surmonter lors de la conception des équipements de ce type consiste à imaginer une structure permettant de répondre à la fois à l'exigence d'étanchéité, à l'exigence d'isolation électrique, et à l'exigence de résistance aux chocs.

Dans ce contexte, l'invention a pour but de proposer un équipement répondant à ce triple besoin.

A cette fin, l'équipement de l'invention, par ailleurs conforme à la définition générique qu'en donne le préambule ci-dessus, est essentiellement **caractérisé en ce que** chaque appareillage comprend en outre une sous-plaque et des premier et deuxième joints annulaires d'étanchéité élastiquement compressibles et sensiblement plans, en ce que la sous-plaque est en matériau diélectrique, est logée dans la cavité de la plaque en lui étant superposée dans une direction définissant une épaisseur de l'appareillage, et présente une première face tournée vers la deuxième face de la plaque, une deuxième face tournée vers le sous-ensemble, et une ouverture coïncidant avec la fenêtre de la plaque, en ce que cette sous-plaque forme, autour de son ouverture, des premier et deuxième cadres respectivement recouverts par les premier et deuxième joints et s'étendant dans des premier et deuxième plans parallèles respectifs différents, en ce que le deuxième cadre entoure le premier cadre tout en étant plus éloigné de la fenêtre que le premier cadre, en ce que le sous-ensemble fonctionnel de chaque appareillage présente une partie périphérique débordant de la fenêtre et en appui étanche sur le premier joint, en ce que le support s'inscrit à l'intérieur du deuxième cadre, en ce qu'en l'absence de contrainte, le deuxième joint dépasse en épaisseur du rebord de la plaque, et en ce que le premier joint est dimensionné pour supporter, transversalement à son plan, une compression élastique d'amplitude au moins égale à l'épaisseur du support.

Dans le cas où l'équipement comprend plusieurs appareillages électriques, il est possible de prévoir que deux au moins de ces appareillages comprennent des sous-ensembles fonctionnels différents choisis dans l'ensemble comprenant un interrupteur monostable, un interrupteur bistable, une prise de courant, et un détecteur infrarouge.

Dans ce cas, il est judicieux de faire en sorte que tous les appareillages de cet équipement comprennent des plaques identiques, des sous-plaques identiques, des supports identiques, des premiers joints identiques, et des deuxièmes joints identiques, ledit équipement constituant ainsi une gamme d'appareillages électriques modulables.

Le sous-ensemble fonctionnel de chaque appareillage peut avantageusement comprendre un enjoliveur métallique présentant une lumière centrale et s'inscrivant, au moins de façon partielle, à l'intérieur de la fenêtre de la plaque, auquel cas ce sous-ensemble fonctionnel peut aussi comprendre un sous-enjoliveur serti à l'enjoliveur et très préférablement réalisé dans un matériau diélectrique.

Dans le cas où le sous-ensemble fonctionnel d'au moins un appareillage électrique de l'équipement de l'invention constitue un interrupteur, il est possible de prévoir d'une part que ce sous-ensemble comprenne un mécanisme de commande incluant, empilés dans cet ordre et suivant la direction de l'épaisseur, l'enjoliveur, un doigt basculant s'inscrivant dans la lumière de l'enjoliveur, un cadre à tourillons, une membrane souple obturant de façon étanche la lumière de l'enjoliveur, et le sous-enjoliveur, de prévoir par ailleurs que l'enjoliveur comprenne des berceaux latéraux respectivement disposés en regard des tourillons de part et d'autre de la lumière, que le doigt soit doté de pattes latérales à profil arqué dont chacune est guidée entre un tourillon et un berceau pour permettre un basculement de ce doigt, et de prévoir que le sous-enjoliveur et l'enjoliveur soient sertis l'un à l'autre au moyen de pions traversant la membrane et le cadre à tourillons.

Les moyens de fixation de la plaque de chaque appareillage comprennent par exemple des vis engagées dans des perçages de la plaque et des bouchons métalliques insérés à force dans ces perçages et interdisant l'accès à ces vis.

D'autres caractéristiques et avantages de l'invention ressortiront clairement de la description qui en est faite ci-après, à titre indicatif et nullement limitatif, en référence aux dessins annexés, dans lesquels :

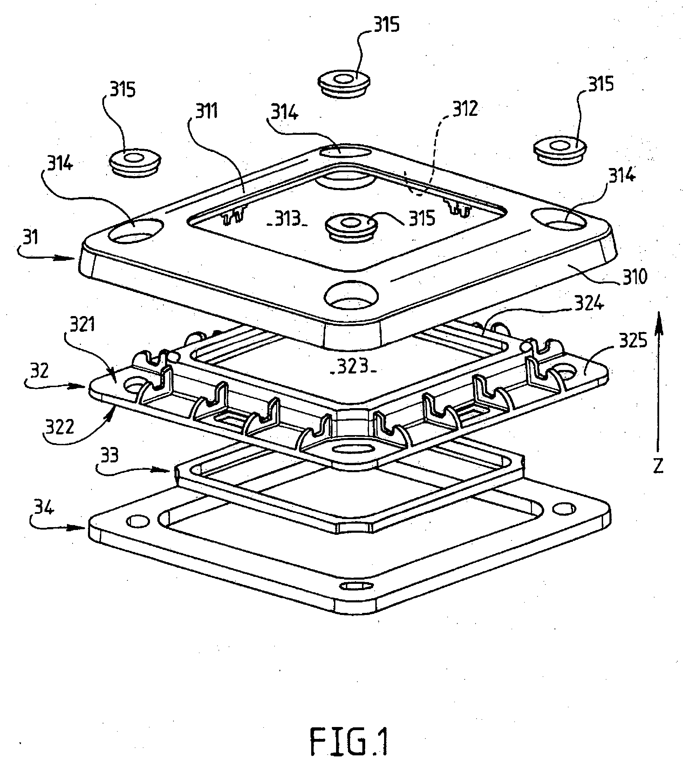

- la figure 1 est une vue éclatée et en perspective d'une partie générique d'un appareillage appartenant à un équipement conforme à l'invention ;
- la figure 2 est une vue éclatée et en perspective d'une partie spécifique d'un appareillage appartenant à un équipement conforme à l'invention ;
- la figure 3 est une vue éclatée et en perspective d'un appareillage comprenant notamment les parties illustrées aux figures 1 et 2 ;
- la figure 4 est une vue en perspective, à échelle agrandie, de la partie spécifique illustrée à la figure 2 et observée après assemblage ;
- la figure 5 est une vue en perspective, à échelle agrandie, de la partie générique illustrée à la figure 1 et observée après assemblage ;
- la figure 6 est une vue en perspective, à échelle agrandie, de l'appareillage illustré à la figure 3 et observé après assemblage ; et
- la figure 7 est une vue partiellement éclatée et en perspective d'un appareillage comprenant notamment la partie générique illustrée aux figures 1 et 5 et une partie spécifique différente de celle illustrée aux figures 2 et 4.

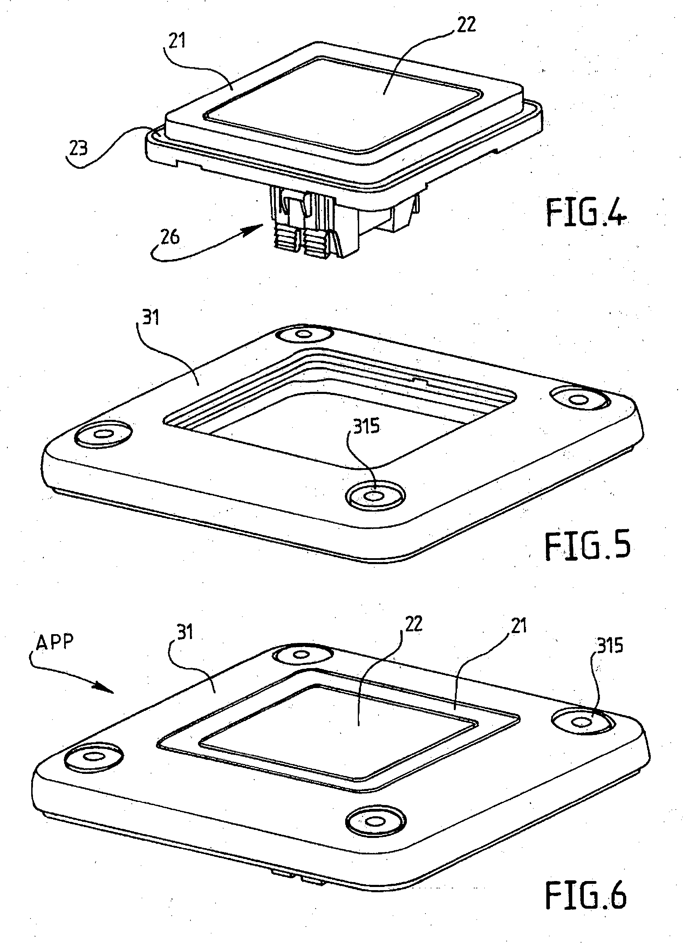

Comme annoncé précédemment, l'invention concerne un équipement comprenant un ou plusieurs appareillages électriques à usage intensif, tel que celui qu'illustre la figure 6 sous la référence APP.

Chaque appareillage APP est du type de ceux qui comprennent un support plat 1, un sous-ensemble fonctionnel 2, et une plaque métallique 31.

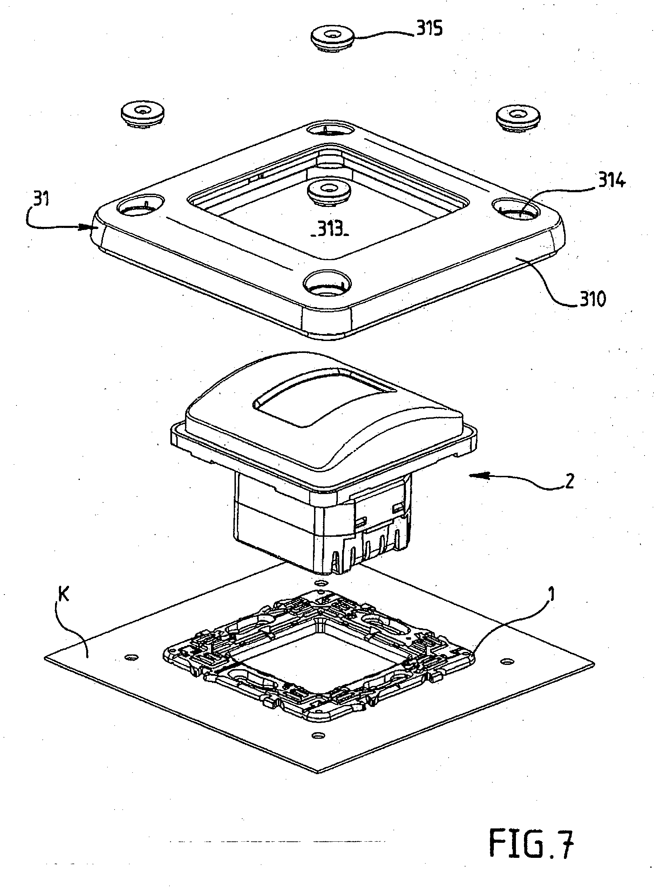

Dans la configuration opérationnelle de l'appareillage, le support plat 1 est fixé à une cloison K (figure 7) telle qu'un mur ou un plafond, typiquement au moyen de vis.

Par ailleurs, dans cette même configuration, le sous-ensemble fonctionnel 2 est fixé au support 1 et partiellement encastré dans la cloison.

Enfin, toujours en configuration opérationnelle de l'appareillage, la plaque métallique 31 est fixée à la cloison par des moyens de fixation, incluant typiquement des vis (non représentées) et conçus pour résister à des tentatives d'effraction.

La plaque 31 est essentiellement formée d'une paroi dotée d'un rebord périphérique 310 replié vers le sous-ensemble 2, de deux faces opposées 311 et 312, et d'une fenêtre 313.

La deuxième face 312 de la plaque 31 est tournée vers le sous-ensemble 2 et délimite une cavité.

Par ailleurs, la fenêtre 313 forme une découpe centrale de la plaque 31 et donne accès, au moins fonctionnellement, au sous-ensemble fonctionnel 2.

Selon l'invention, chaque appareillage APP comprend en outre une sous-plaque 32 et deux joints annulaires d'étanchéité 33 et 34, élastiquement compressibles, sensiblement plans, et de préférence réalisés dans un matériau diélectrique élastomère.

La sous-plaque 32, qui est réalisée dans un matériau diélectrique, est logée dans la cavité de la plaque 31 et superposée à cette plaque 31 dans la direction Z qui définit l'épaisseur de l'appareillage.

Les joints 33 et 34 sont dimensionnés de façon telle que la projection du premier joint 33 dans un plan perpendiculaire à la direction Z s'inscrit à l'intérieur du joint 34, les joints 33 et 34 occupant donc respectivement des positions interne et externe.

La sous-plaque 32 présente une première face 321 tournée vers la deuxième face 312 de la plaque 31, une deuxième face 322 tournée vers le sous-ensemble 2, et une ouverture 323 qui coïncide avec la fenêtre 313 de la plaque 31.

Autour de son ouverture 323, la sous-plaque 32 forme deux cadres 324 et 325 s'étendant dans deux plans parallèles respectifs différents.

Le deuxième cadre 325 est à la fois plus éloigné de la fenêtre 313 de la plaque 31 que le premier cadre 324 suivant la direction Z, et plus éloigné de l'ouverture 323 de la sous-plaque 32 que le premier cadre 324 perpendiculairement à la direction Z.

En d'autres termes, le deuxième cadre 325 entoure le premier cadre 324, les cadres 324 et 325 occupant donc respectivement des positions interne et externe.

Sur la deuxième face 322 de la sous-plaque 32, le cadre interne 324 est recouvert par le joint interne 33 tandis que le cadre externe 325 est recouvert par le joint externe 34.

Le joint externe 34 est dimensionné dans son plan pour déborder du support 1, qui s'inscrit à l'intérieur du cadre 325, et dimensionné suivant la direction Z pour dépasser en épaisseur, en l'absence de contrainte, du rebord 310 de la plaque 31.

Le joint interne 33 est quant à lui dimensionné pour supporter, transversalement à son plan c'est-à-dire suivant la direction Z, une compression élastique d'amplitude au moins égale à l'épaisseur du support 1, ce joint interne 33 pouvant ainsi s'appliquer de façon étanche sur une partie périphérique 23 du sous-ensemble fonctionnel 2, qui déborde de la fenêtre 313.

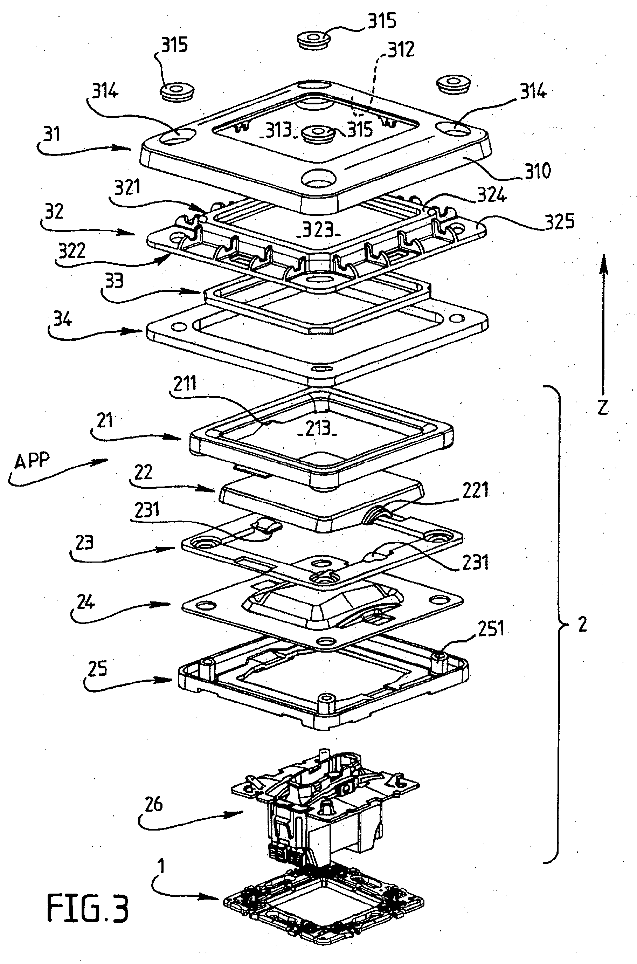

Les appareillages APP formant l'équipement de l'invention peuvent appartenir à des types différents et comprendre à cette fin des sous-ensembles fonctionnels 2 différents pour constituer notamment un interrupteur monostable (figures 3 et 6), un interrupteur bistable, une prise de courant, ou un détecteur infrarouge (figure 7).

Néanmoins, quel que soit leur type, tous ces appareillages comprennent des plaques 31 identiques, des sous-plaques 32 identiques, des supports 1 identiques, des joints internes 33 identiques, et des joints externes 34 identiques, l'équipement de l'invention constituant ainsi une gamme d'appareillages électriques modulables.

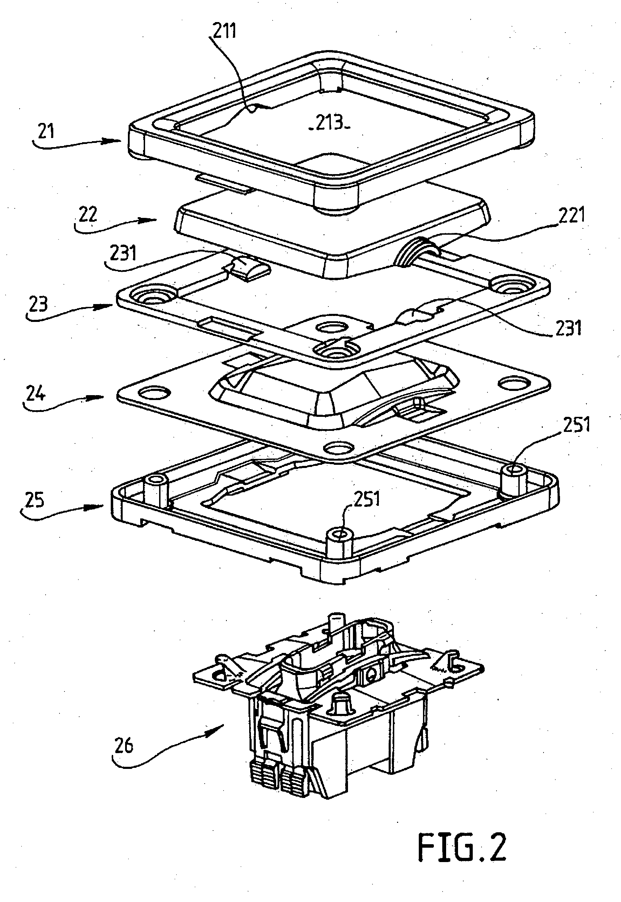

Comme le montrent les figures 2 et 3, le sous-ensemble fonctionnel 2 de chaque appareillage comprend avantageusement un enjoliveur métallique 21 présentant une lumière centrale 213 et s'inscrivant, au moins de façon partielle, à l'intérieur de la fenêtre 313 de la plaque 31.

Dans ce cas, le sous-ensemble fonctionnel 2 peut aussi comprendre un sous-enjoliveur 25 serti à l'enjoliveur 21 et réalisé dans un matériau diélectrique.

Dans le cas illustré aux figures 2 et 3 où l'appareillage constitue un interrupteur, cet appareillage comprend un mécanisme de commande formé de plusieurs éléments empilés suivant la direction Z de son épaisseur.

Ces éléments sont, dans l'ordre, l'enjoliveur 21, un doigt basculant 22, un cadre 23 à tourillons 231, une membrane souple 24, le sous-enjoliveur 25, et le module électrique 26 de commutation.

Le doigt basculant est dimensionné pour s'inscrire dans la lumière 213 de l'enjoliveur 21, cette lumière 213 étant obturée de façon étanche par la membrane souple 24.

L'enjoliveur 21 comprend des berceaux latéraux 211 respectivement disposés en regard des tourillons 231 du cadre 23, de part et d'autre de la lumière 213 de cet enjoliveur.

Le doigt basculant 22 est doté de pattes latérales 221 à profil arqué dont chacune est guidée entre un tourillon 231 du cadre 23 et un berceau 211 de l'enjoliveur 21, pour permettre un basculement de ce doigt 22.

Par ailleurs, le sous-enjoliveur 25 et l'enjoliveur 21 sont sertis l'un à l'autre au moyen de pions 251 formés sur le sous-enjoliveur 25 et traversant d'une part la membrane 24 de façon étanche, et d'autre part le cadre 23 à tourillons.

Comme le montre la figure 3, le cadre 23 à tourillons déborde de la fenêtre 313 de la plaque 31 et forme ainsi la partie périphérique du sous-ensemble fonctionnel 2 qui s'appuie de façon étanche sur le joint interne 33.

La plaque 31 présente des perçages 314 dans lesquels sont, en configuration opérationnelle, engagées de vis de fixation de cette plaque dans la cloison supportant l'appareillage.

Pour interdire l'accès à ces vis, chaque appareillage comprend des bouchons métalliques 315 qui sont insérés à force dans ces perçages 314, et qui n'offrent aucune prise qui permettrait leur extraction.

## Revendications

1. Equipement comprenant au moins un appareillage électrique (APP) à usage intensif, chaque appareillage (APP) comprenant : un support plat (1) conçu pour être fixé, en configuration opérationnelle de cet appareillage, à une cloison telle qu'un mur ou un plafond ; un sous-ensemble fonctionnel (2) .fixé au support (1) et partiellement encastré dans la cloison en configuration opérationnelle ; et une plaque métallique (31) fixée, en configuration opérationnelle, à la cloison par des moyens de fixation conçus pour résister à des tentatives d'effraction, la plaque (31) comprenant essentiellement une paroi dotée d'un rebord périphérique (310) tombant en direction du sous-ensemble (2), de première et deuxième faces opposées (311, 312) dont la deuxième (312) est tournée vers le sous-ensemble (2) et délimite une cavité, et d'une fenêtre (313) donnant au moins fonctionnellement accès au sous-ensemble fonctionnel (2), **caractérisé en ce que** chaque appareillage (APP) comprend en outre une sous-plaque (32) et des premier et deuxième joints annulaires d'étanchéité (33, 34) élastiquement compressibles et sensiblement plans, **en ce que** la sous-plaque (32) est en matériau diélectrique, est logée dans la cavité de la plaque (31) en lui étant superposée dans une direction (Z) définissant une épaisseur de l'appareillage, et présente une première face (321) tournée vers la deuxième face (312) de la plaque (31), une deuxième face (322) tournée vers le sous-ensemble (2), et une ouverture (323) coïncidant avec la fenêtre (313) de la plaque (31), **en ce que** cette sous-plaque (32) forme, autour de son ouverture (323), des premier et deuxième cadres (324, 325) respectivement recouverts par les premier et deuxième joints (33, 34) et s'étendant dans des premier et deuxième plans parallèles respectifs différents, **en ce que** le deuxième cadre (325) entoure le premier cadre (324) tout en étant plus éloigné de la fenêtre (313) que le premier cadre (324), **en ce que** le sou-ensemble fonctionnel (2) de chaque appareillage présente une partie périphérique (23) débordant de la fenêtre (313) et en appui étanche sur le premier joint (33), **en ce que** le support (1) s'inscrit à l'intérieur du deuxième cadre (325), **en ce qu'**en l'absence de contrainte, le deuxième joint (34) dépasse en épaisseur du rebord (310) de la plaque (31), et **en ce que** le premier joint (33) est dimensionné pour supporter, transversalement à son plan, une compression élastique d'amplitude au moins égale à l'épaisseur du support (1).

2. Equipement suivant la revendication 1, comprenant plusieurs appareillages électriques, **caractérisé en ce que** deux au moins de ces appareillages comprennent des sous-ensembles fonctionnels (2) différents choisis dans l'ensemble comprenant un interrupteur monostable, un interrupteur bistable, une prise de courant, et un détecteur infrarouge.

3. Equipement suivant la revendication 2, **caractérisé en ce que** tous les appareillages de cet équipement comprennent des plaques (31) identiques, des sous-plaques (32) identiques, des supports (1) identiques, des premiers joints (33) identiques, est des deuxièmes joints (34) identiques, ledit équipement constituant ainsi une gamme d'appareillages électriques modulables.

4. Equipement suivant l'une quelconque des revendications précédentes, **caractérisé en ce que** le sous-ensemble fonctionnel (2) de chaque appareillage comprend un enjoliveur métallique (21) présentant une lumière centrale (213) et s'inscrivant, au moins de façon partielle, à l'intérieur de la fenêtre (313) de la plaque (31).

5. Equipement suivant la revendication 4, **caractérisé en ce que** le sous-ensemble fonctionnel (2) d'au moins un appareillage de cet équipement comprend un sous-enjoliveur (25) serti à l'enjoliveur (21).

6. Equipement suivant la revendication 5, **caractérisé en ce que** le sous-enjoliveur (25) est réalisé dans un matériau diélectrique.

7. Equipement suivant l'une quelconque des revendications 5 et 6, **caractérisé en ce que** le sous-ensemble fonctionnel (2) d'au moins un appareillage électrique de cet équipement constitue un interrupteur et comprend un mécanisme de commande incluant, empilés dans cet ordre.et suivant la direction (Z) de l'épaisseur, l'enjoliveur (21), un doigt basculant (22) s'inscrivant dans la lumière (213) de l'enjoliveur (21), un cadre (23) à tourillons (231), une membrane souple (224) obturant de façon étanche la lumière (213) de l'enjoliveur (21), est le sous-enjoliveur (25), **en ce que** l'enjoliveur (21) comprend des berceaux latéraux (211) respectivement disposés en regard des tourillons (231) de part et d'autre de la lumière (213), **en ce que** le doigt (22) est doté de pattes latérales (221) à profil arqué dont chacune est guidée entre un tourillon (231) et un berceau (211) pour permettre un basculement de ce doigt (22), et **en ce que** le sous-enjoliveur (25) et l'enjoliveur (21) sont sertis l'un à l'autre au moyen de pions (251) traversant la membrane (24) et le cadre (23) à tourillons.

8. Equipement suivant l'une quelconque des revendications précédentes, **caractérisé en ce que** les moyens de fixation de la plaque (31) de chaque appareillage comprennent des vis engagées dans des perçages (314) de la plaque (31) et des bouchons métalliques (315) insérés à force dans ces perçages (314) et interdisant l'accès à ces vis.

## Patentansprüche

1. Vorrichtung, welche mindestens ein elektrisches Betriebsmittel (APP) mit intensiver Nutzung umfasst, wobei jedes Betriebsmittel (APP) umfasst:
einen flachen Träger (1), der dafür ausgebildet ist, in einer Betriebskonfiguration dieses Betriebsmittels an einer Trennwand wie etwa einer Wand oder einer Decke befestigt zu werden; eine funktionale Unterbaugruppe (2), die in der Betriebskonfiguration an dem Träger (1) befestigt und teilweise in die Trennwand eingelassen ist;
und eine Metallplatte (31), die in der Betriebskonfiguration an der Trennwand durch Befestigungsmittel befestigt ist, die dafür ausgebildet sind, Aufbruchversuchen standzuhalten, wobei die Platte (31) im Wesentlichen eine Wand umfasst, die mit einem Umfangsrand (310), der sich in Richtung der Unterbaugruppe (2) erstreckt, mit einer ersten und einer zweiten Seite (311, 312), die einander gegenüberliegen, wobei die zweite (312) der Unterbaugruppe (2) zugewandt ist und einen Hohlraum begrenzt, und mit einem Fenster (313), das wenigstens funktional einen Zugang zu der funktionalen Unterbaugruppe (2) ermöglicht, ausgestattet ist, **dadurch gekennzeichnet, dass** jedes Betriebsmittel (APP) außerdem eine Unterplatte (32) und eine erste und eine zweite ringförmige Dichtung (33, 34), die elastisch komprimierbar und im Wesentlichen eben sind, umfasst, dadurch, dass die Unterplatte (32) aus dielektrischem Material besteht, in dem Hohlraum der Platte (31) aufgenommen ist und dabei dieser in einer eine Dicke des Betriebsmittels definierenden Richtung (Z) überlagert ist und eine der zweiten Seite (312) der Platte (31) zugewandte erste Seite (321), eine der Unterbaugruppe (2) zugewandte zweite Seite (322) und eine mit dem Fenster (313) der Platte (31) zusammenfallende Öffnung (323) aufweist, dadurch, dass diese Unterplatte (32) um ihre Öffnung (323) herum einen ersten und einen zweiten Rahmen (324, 325) bildet, die von der ersten bzw. zweiten Dichtung (33, 34) bedeckt werden und sich in einer jeweiligen ersten bzw. zweiten Ebene erstrecken, die parallel und verschieden sind, dadurch, dass der zweite Rahmen (325) den ersten Rahmen (324) umgibt und dabei weiter von dem Fenster (313) entfernt ist als der erste Rahmen (324), dadurch, dass die funktionale Unterbaugruppe (2) jedes Betriebsmittels einen Umfangsteil (23) aufweist, der über das Fenster (313) hinausragt und an der ersten Dichtung (33) dicht anliegend ist, dadurch, dass sich der Träger (1) ins Innere des zweiten Rahmens (325) einpassen lässt, dadurch, dass bei nicht vorhandener Belastung die zweite Dichtung (34) in der Dicke über den Rand (310) der Platte (31) vorsteht, und dadurch, dass die erste Dichtung (33) so bemessen ist, dass sie quer zu ihrer Ebene eine elastische Kompression mit einer Amplitude aushält, die mindestens gleich der Dicke des Trägers (1) ist.

2. Vorrichtung nach Anspruch 1, welche mehrere elektrische Betriebsmittel aufweist, **dadurch gekennzeichnet, dass** mindestens zwei dieser Betriebsmittel verschiedene funktionale Unterbaugruppen (2) umfassen, die aus der Gesamtheit ausgewählt sind, welche einen monostabilen Schalter, einen bistabilen Schalter, eine Steckdose und einen Infrarotdetektor umfasst.

3. Vorrichtung nach Anspruch 2, **dadurch gekennzeichnet, dass** alle Betriebsmittel dieser Vorrichtung identische Platten (31), identische Unterplatten (32), identische Träger (1), identische erste Dichtungen (33) und identische zweite Dichtungen (34) umfassen, wobei die Vorrichtung somit eine Serie von modulierbaren elektrischen Betriebsmitteln darstellt.

4. Vorrichtung nach einem der vorhergehenden Ansprüche, **dadurch gekennzeichnet, dass** die funktionale Unterbaugruppe (2) jedes Betriebsmittels eine metallische Blende (21) umfasst, die eine zentrale Öffnung (213) aufweist und sich wenigstens teilweise ins Innere des Fensters (313) der Platte (31) einpassen lässt.

5. Vorrichtung nach Anspruch 4, **dadurch gekennzeichnet, dass** die funktionale Unterbaugruppe (2) wenigstens eines Betriebsmittels dieser Vorrichtung eine Unterblende (25) umfasst, die mit der Blende (21) vercrimpt ist.

6. Vorrichtung nach Anspruch 5, **dadurch gekennzeichnet, dass** die Unterblende (25) aus einem dielektrischen Material hergestellt ist.

7. Vorrichtung nach einem der Ansprüche 5 und 6, **dadurch gekennzeichnet, dass** die funktionale Unterbaugruppe (2) mindestens eines elektrischen Betriebsmittels dieser Vorrichtung einen Schalter darstellt und einen Steuermechanismus umfasst, welcher, in der angegebenen Reihenfolge und entlang der Richtung (Z) der Dicke gestapelt, die Blende (21), einen Kippfinger (22), der sich in die Öffnung (213) der Blende (21) einpassen lässt, einen Rahmen (23) mit Erhebungen (231), eine nachgiebige Membran (24), welche die Öffnung (213) der Blende (21) dicht verschließt, und die Unterblende (25) umfasst, dadurch, dass die Blende (21) seitliche bogenförmige Vertiefungen (211) aufweist, die beiderseits der Öffnung (213) jeweils gegenüber den Erhebungen (231) angeordnet sind, dadurch, dass der Finger (22) mit seitlichen Lappen (221) mit bogenförmigem Profil ausgestattet ist, die jeweils zwischen einer Erhebung (231) und einer bogenförmigen Vertiefung (211) geführt sind, um ein Kippen dieses Fingers (22) zu ermöglichen, und dadurch, dass die Unterblende (25) und die Blende (21) mithilfe von Zapfen (251) miteinander vercrimpt sind, welche die Membran (24) und den Rahmen (23) mit Erhebungen durchqueren.

8. Vorrichtung nach einem der vorhergehenden Ansprüche, **dadurch gekennzeichnet, dass** die Mittel zur Befestigung der Platte (31) jedes Betriebsmittels Schrauben, die mit Bohrungen (314) der Platte (31) in Eingriff stehen, und Metallstopfen (315), die unter Kraftanwendung in diese Bohrungen (314) eingesetzt sind und den Zugang zu diesen Schrauben verhindern, umfassen.

## Claims

1. Equipment comprising at least one electrical switchgear element (APP) with intensive use, each switchgear element (APP) comprising: a flat support (1) designed to be fixed, in the operational configuration of this switchgear element, to a partition such as a wall or ceiling; a functional subassembly (2) fixed to the support (1) and partially embedded in the partition in the operational configuration; and a metal plate (31) fixed, in the operational configuration, to the partition by fixing means designed to withstand intrusion attempts, the plate (31) essentially comprising a wall provided with a peripheral flange (310) dropping away towards the subassembly (2), first and second opposite faces (311, 312), the second of which (312) is turned towards the subassembly (2) and delimits a cavity, and a window (313) giving, at least functionally, access to the functional subassembly (2), **characterized in that** each switchgear element (APP) further comprises a sub-plate (32) and first and second elastically compressible and substantially planar annular gaskets (33, 34), **in that** the sub-plate (32) is made of dielectric material, is housed in the cavity of the plate (31) by being superposed thereon in a direction (Z) defining a thickness of the switchgear element, and has a first face (321) turned towards the second face (312) of the plate (31), a second face (322) turned towards the subassembly (2), and an opening (323) coinciding with the window (313) of the plate (31), **in that** this sub-plate (32) forms, around its opening (323), first and second frames (324, 325) respectively covered by the first and second gaskets (33, 34) and extending in first and second respective different parallel planes, **in that** the second frame (325) surrounds the first frame (324) while being further away from the window (313) than the first frame (324), **in that** the functional subassembly (2) of each switchgear element has a peripheral part (23) extending out of the window (313) and bearing in a seal-tight manner on the first gasket (33), **in that** the support (1) fits within the second frame (325), **in that**, in the absence of stress, the second gasket (34) extends beyond the flange (310) of the plate (31) in thickness, and **in that** the first gasket (33) is dimensioned to support, transversely to its plane, an elastic compression of amplitude at least equal to the thickness of the support (1).

2. Equipment according to Claim 1, comprising a plurality of electrical switchgear elements, **characterized in that** at least two of these switchgear elements comprise different functional subassemblies (2) chosen from the set comprising a monostable switch, a bistable switch, a power outlet, and an infrared detector.

3. Equipment according to Claim 2, **characterized in that** all the switchgear elements of this equipment comprise identical plates (31), identical sub-plates (32), identical supports (1), identical first gaskets (33), and identical second gaskets (34), said equipment thus constituting a range of modular electrical switchgear elements.

4. Equipment according to any one of the preceding claims, **characterized in that** the functional subassembly (2) of each switchgear element comprises a metal trim (21) having a central opening (213) and fitting, at least partially, within the window (313) of the plate (31).

5. Equipment according to Claim 4, **characterized in that** the functional subassembly (2) of at least one switchgear element of this equipment comprises a sub-trim (25) crimped to the trim (21).

6. Equipment according to Claim 5, **characterized in that** the sub-trim (25) is produced in a dielectric material.

7. Equipment according to any one of Claims 5 and 6, **characterized in that** the functional subassembly (2) of at least one electrical switchgear element of this equipment constitutes a switch and comprises a control mechanism including, stacked in this order and in the direction (Z) of the thickness, the trim (21), a pivoting finger (22) that fits within the opening (213) of the trim (21), a frame (23) with trunnions (231), a flexible membrane (24) blocking the opening (213) of the trim (21) in a seal-tight manner, and the sub-trim (25), in a seal-tight manner, **in that** the trim (21) comprises lateral cradles (211) respectively arranged facing the trunnions (231) on either side of the opening (213), **in that** the finger (22) is provided with lateral tabs (221) with arched profile, each of which is guided between a trunnion (231) and a cradle (211) to allow this finger (22) to pivot, and **in that** the sub-trim (25) and the trim (21) are crimped to one another by means of pins (251) passing through the membrane (24) and the frame (23) with trunnions.

8. Equipment according to any one of the preceding claims, **characterized in that** the means for fixing the plate (31) of each switchgear element comprise screws engaged in drill-holes (314) of the plate (31) and metal plugs (315) inserted with force into these drill-holes (314) and preventing access to these screws.
